# EUROPEAN PATENT SPECIFICATION

(11) **EP 2 250 719 B1**
(45) Date of publication and mention of the grant of the patent: **29.10.2014**
(21) Application number: 09717276.1
(22) Date of filing: 25.02.2009
(51) Int. Cl.: B63H 21/30, H02P 9/10

(54) **VIBRATION DAMPENING ARRANGEMENT**
VIBRATIONSDÄMPFENDE ANORDNUNG
DISPOSITIF D'AMORTISSEMENT DE VIBRATIONS

(30) Priority: 03.03.2008 FI 20085203
(43) Date of publication of application: 17.11.2010
(73) Proprietor: Wärtsilä Finland Oy, 65380 Vaasa (FI)
(72) Inventor: ÖSTMAN, Fredrik, FI-20540 Turku (FI)
(74) Representative: Berggren Oy Ab
(86) International application number: PCT/FI2009/050154
(87) International publication number: WO 2009/109700

(56) References cited:
- EP-A- 0 713 287
- EP-A- 1 638 199
- US-A- 5 977 731
- US-A1- 2006 232 250

## Description

### Field of invention

The present invention relates to a vibration dampening arrangement in the electric networks of ships.

### Background art

Electric power is produced by means of generators connected to the electric power transmission network. The transmission network transmits the produced electric power to consumers, such as electric motors, lighting equipment and the like. There is no economic way of storing electric power whereby the produced electric power must be consumed as it is produced. In other words, the amount of consumed energy must match that of produced energy.

The document EP 1 638 199 discloses a motor drive system; each motor being connected to the distribution network through a frequency converter. The power is taken from the distribution network to which generator sets are connected. The frequency of the network is kept as close as possible to a nominal valve.

Generators are electric motors designed for producing electricity, the rotors of which rotate at a certain speed. Usually the frequency produced by the generators is the same as the frequency of the electric power transmission network. Usually the frequency of the transmission network is 50 Hz. However, as the demand of the electric network fluctuates constantly, i.e. the network is in a dynamic state, the electric network must be able to accommodate a certain amount of imbalance between the produced electric energy and the consumed electric energy. This imbalance can be seen as small fluctuations of the network frequency. The rotating masses of generators and electric motors using electric power can compensate for small and short-duration imbalance situations, because energy is stored in the rotating masses in the form of inertia.

Nowadays frequency converters are used in a number of applications. With a frequency converter the electric power input can be dimensioned to exactly correspond with the demand of the electric motor or other electrical appliance. For example, a squirrel cage motor of an air blower does not have to be always driven at full speed, if partial rotation speed is sufficient for most of the operation time. By using a frequency converter it is possible to save a lot of energy. In a normal frequency converter alternating voltage is converted to direct voltage which is then converted back to another alternating voltage. The second alternating voltage is used for directing electric power to a load, such as an electric motor. The second alternating voltage can also be controlled. The frequency controller drive, however, cuts the direct connection between the electric motor and the production of electricity, whereby the rotation inertia of the electric motor no longer can take part in compensating for smaller load variations in the network.

A generator assembly comprises a power source, such as a diesel engine, and an electric motor acting as a generator. The power source motor is conventionally connected to the electric generator via an elastic clutch dampening the propagation of the torque vibrations of the power source to the electric generator. However, especially the lowest torque vibration frequencies propagate into the electric generator and cause unwanted vibrations in the frequency of the output voltage of the generator. As the generators are connected in parallel to the local network, the vibrations of each generator have an effect on each other which can cause considerable vibrations into the local network as well as the debarkers of the network. This can cause electric power output cuts, mechanical failures and electrical failures.

There are solutions for reducing disadvantageous vibrations that dampen the vibrations of the power source motor, such as an internal combustion engine. These solutions allow dampening the unwanted vibrations of the crankshaft. These arrangements are specific to each power source motor and they can not dampen vibrations that have propagated to the local network.

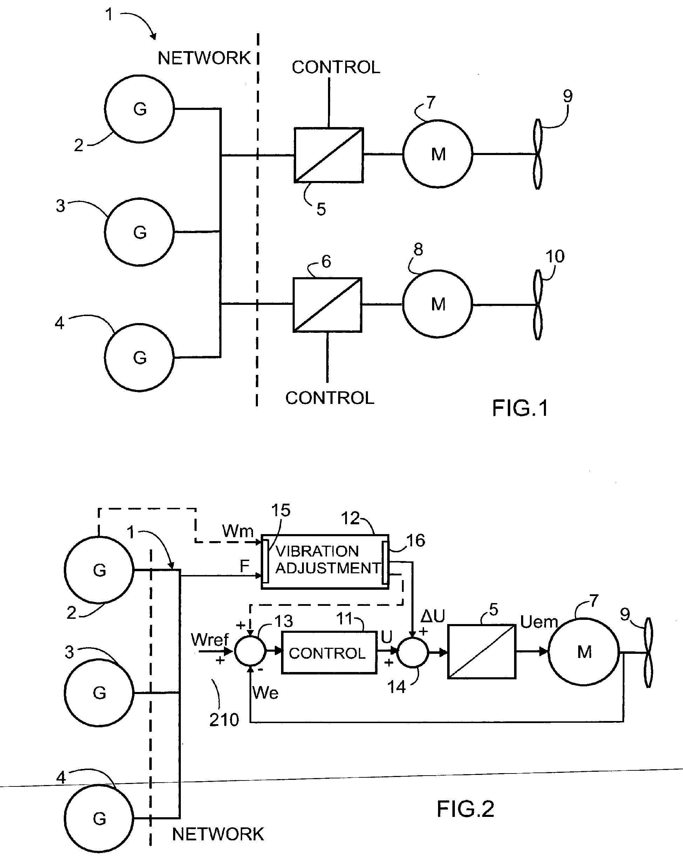

Figure 1 shows an example of the electric network 1 having generators 2, 3, 4 (power source and an electric generator). Electric motors 7, 8 are connected to the network via motor-specific frequency converters 5, 6. The shafts of the electric motors are connected to the propellers 9, 10 of the ship. The electric motors of a ship are large, especially when their power is compared to the size of the electric network of the ship. The unwanted vibrations of the network 1 can cause faults in frequency converters and other loads of the network, such as lighting and wall socket loads (not shown in the figures).

### Brief description of the invention

The purpose of the invention is to reduce the disadvantageous vibrations occurring in a relatively small electric network, such as in a ship. The purpose is achieved by means disclosed in the main claim. The dependent claims disclose various embodiments of the invention. The idea is to reduce the vibrations of a local network by controlling the load of the network so that the vibrations are reduced. The load to be controlled can be, for example, an electric motor receiving its electric power via a frequency converter. When the frequency converter is suitably controlled, the frequency converter and the electric motor consume vibrations, i.e. the vibrations of the local network are dampened.

The arrangement according to the invention comprises a adjustment unit having a first interface for receiving measurement signals containing information about the unwanted vibrations and a second interface for transmitting control signals for dampening the vibrations. The adjustment unit is arranged to form control signals as a response to the information in the measurement signals, the control signals being operationally connectable to the control signal of the frequency converter for dampening the said vibrations by using the frequency converter and the load of the frequency converter.

### List of figures

In the following the invention is described in more detail by reference to the figures in the drawing, in which
- Figure 1: illustrates an example of the electricity network of a ship,
- Figure 2: illustrates an example of the arrangement according to the invention.
- Figure 3: illustrates an example of the method according to the invention.

### Description of the invention

Figure 2 illustrates an example of the arrangement according to the invention. The example of the figure shows controlling only one frequency converter 5 and an electric motor 7 for dampening the vibrations, but it is obvious that a number of frequency converters can also be controlled with the method according to the invention. The frequency converter is controlled conventionally so that the electric motor 7 rotates at the desired speed. The desired rotation speed Wref is directed to the control unit 11 of the frequency converter, the control unit further controlling the frequency converter. The actual rotation speed We is monitored via a feedback loop so as to have an effect on the Wref value. The arrangement comprises an adjustment unit 12 to dampen the vibrations of the local network. The adjustment unit has a first interface 15 for receiving data containing information about the unwanted vibrations. The information is, for example, rotation speed data Wm of each generator (for reasons of clarity, the figure only shows one dashed line to show the rotation speed measurements of the generators) or frequency information F of the local network. Measurement of the frequency of the local network is the more preferable method because it necessitates only one measurement location.

The adjustment unit 12 is arranged so that it can use process data about the generators (the internal combustion engine and the generator electric motor), the frequency converter and the electric motor. The unwanted vibrations are disturbing frequency components (i.e. rotation speed vibrations of the generators) that are combined in the local network). When the process data of the various apparatuses of the arrangement are known, the adjustment unit can form a control signal Δu having an effect on the control signal u of the frequency converter 5 via the second interface 16 of the adjustment unit. The frequency converter then has an effect on the stator voltage of the electric motor 7 so that the disturbing vibrations can be dampened at the frequency converter and the electric motor. In other words, the frequency converter and the electric motor consume/compensate for the disturbing vibrations of the local network.

The unwanted vibrations do not have an effect on the power consumption. In practice the local network is a three-phase network and the disadvantageous vibrations do not increase or decrease the transferred effective output. Thus the removal of disadvantageous vibrations does not have an effect on the effective output, either.

The control signal Δu can be arranged to have an effect on the control unit of the second frequency converter either via the Wref signal or directly to the control signal u. In case the signal Wref is effected on, the control signal Δu is connected to the reference signal changing unit 13 of the control unit of the frequency converter. In case the signal u is effected on, the control signal Δu is connected to the changing unit 14 of the control signal of the frequency converter. In practice the value of the control signal Δu is slowly increased to avoid activating other unwanted frequencies. In other words, the aim is to use the control signal for reducing the disadvantageous vibration frequencies.

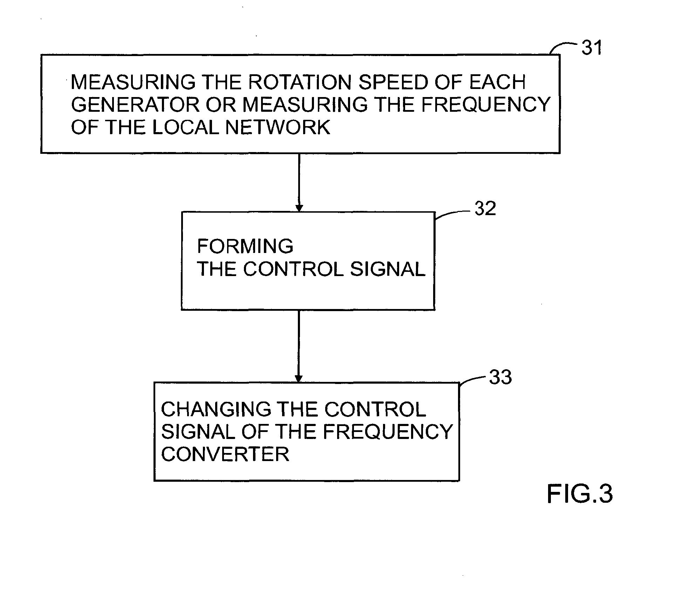

Figure 3 shows a flow chart example of the method according to the invention for dampening the unwanted vibrations of the local network. The method is designed to be carried out in the above-mentioned arrangement or corresponding arrangements. The method comprises a measurement step, the step of forming the control signal and the step of changing the control signal of the frequency converter. During the measurement step 31 the rotation speeds of each generator of the local network are measured or the frequency of the local network is measured. A control signal is formed as a response to the measurement during the step of forming the control signal. During the step 33 of changing the control signal of the frequency converter the control signal of the frequency converter is changed to dampen the said vibrations by using the frequency converter and the load of the frequency converter, such as an electric motor.

The inventive arrangement can be carried out in a number of ways. The adjustment unit 12 can be integral with the control unit 11 of the frequency controller or it can be a separate unit as shown in figure 2. The adjustment unit can also be integral with the frequency converter comprising a control unit. The adjustment unit can be an electronic circuit, such as an ASIC circuit, or the adjustement unit is a program assembly arranged to be executed in the processor unit.

The inventive arrangement considerably reduces the unwanted vibrations in a local network, the vibrations being possibly disadvantageous to the apparatuses connected to the network. Additionally, the vibrations can prevent measurements made from the network or from the rotation axis of the generator, the measurements being used e.g. for controlling the motor rotating the generator, the controlling including balancing the cylinders or estimating the load. Thus, if the unwanted vibrations are not connected to only one motor, the measurements used for controlling one single internal combustion engine can contain excessive components disturbing the measurement.

In the light of the above description and its examples it is obvious that the embodiment according to the invention can be realized in a number of ways. It is obvious that the invention is not limited to the examples mentioned here, but that the invention can be realized by a number of different embodiments.

Thus, any inventive embodiment can be carried out within the scope of the invention.

## Claims

1. An arrangement for dampening the vibrations occurring in an electric network of a ship, **characterized in that** the arrangement comprises an adjustment unit (12) having a first interface (15) for receiving measurement signals containing data about unwanted torque vibrations of generators of the electric network, and a second interface (16) for transmitting control signals for dampening the vibrations, the adjustment unit being arranged to form control signals as a response to the data of the measurement signals, the control signals being operationally connectable to the control signal of the frequency converter for dampening the vibrations by using the frequency converter and the load of the frequency converter,
which control signals are arranged to change the reference signal of the control unit of the frequency converter or the control signal formed by the control unit.

2. An arrangement according to claim 1. **characterized in that** the first interface is arranged to receive signals concerning the rotation speed of each generator of the local network or the frequency of the local network.

3. An arrangement according to claim 1, **characterized in that** it comprises two or more frequency converters and combinations of load of the frequency converter in question, which frequency converters are controllable by the adjustment unit (12) and connected to the electric network.

4. An arrangement according to claim 4, **characterized in that** the arrangement comprises a frequency converter control unit reference signal changing unit for combining the control signal with the reference signal.

5. An arrangement according to claim 4, **characterized in that** the arrangement comprises a frequency converter control signal changing unit for combining the control signal formed by the adjustment unit with the control signal of the frequency converter.

6. An arrangement according to claim 5 or 6, **characterized in that** the adjustment unit is integral with the control unit of the frequency converter.

7. An arrangement according to claim 5 or 6, **characterized in that** the adjustment unit is integral with the frequency converter comprising a control unit.

8. An arrangement according to claim 5 or 6, **characterized in that** the adjustment unit is an electronic circuit.

9. An arrangement according to claim 5 or 6, **characterized in that** the adjustment unit is a software assembly arranged to be executed in the processor unit.

10. An arrangement according to claim 5 or 6, **characterized in that** the adjustment unit is an ASIC circuit.

11. An arrangement according to any claim of claims 1-11, **characterized in that** the load of the frequency converter is an electric motor that is supplied with electric power via the frequency converter.

12. A method for dampening unwanted vibrations caused by torque vibrations of generators of an electric network, which vibrations occur in a local electric network, **characterized in that** the method comprises the steps of:
A measurement step for measuring the rotation speed of each generator of the local network or the frequency of the local network.
The step of forming a control signal for forming a control signal as a response to the measurement of the measurement step and
The step of changing a second control signal of a frequency converter by changing a reference signal of a control unit of the frequency converter by the control signal or by changing the second control signal formed by the control unit using the control signal, to dampen the said unwanted vibrations by using the frequency converter and the load of the frequency converter.

## Patentansprüche

1. Anordnung zum Dämpfen der Vibrationen, welche in einem elektrischen Netz eines Schiffes auftreten, **dadurch gekennzeichnet, dass** die Anordnung eine Einstelleinheit (12) mit einer ersten Schnittstelle (15) zum Empfangen von Messsignalen, welche Daten über unerwünschte Drehmomentvibrationen der Generatoren des elektrischen Netzes liefern, und mit einer zweiten Schnittstelle (16) zum Übertragen von Steuersignalen zum Dämpfen der Vibrationen umfasst, wobei die Einstelleinheit angeordnet ist, um Steuersignale als eine Reaktion auf die Daten der Messsignale zu bilden, wobei die Steuersignale betrieblich verbindbar mit Steuersignalen des Frequenzwandlers zum Dämpfen der Vibrationen durch Einsetzen des Frequenzwandlers und der Last des Frequenzwandlers sind,
wobei die Steuersignale ausgelegt sind, um das Referenzsignal der Steuereinheit des Frequenzwandlers oder das Steuersignal, welches durch die Steuereinheit gebildet wird, zu verändern.

2. Anordnung nach Anspruch 1, **dadurch gekennzeichnet, dass** die erste Schnittstelle ausgelegt ist, um Signale zu empfangen, welche die Drehzahl jedes Generators des lokalen Netzes oder die Frequenz des lokalen Netzes betreffen.

3. Anordnung nach Anspruch 1, **dadurch gekennzeichnet, dass** sie zwei oder mehr Frequenzwandler und Kombinationen von Lasten der angesprochenen Frequenzwandler umfasst, wobei die Frequenzwandler durch die Einstelleinheit (12) steuerbar sind und mit dem elektrischen Netz verbunden sind.

4. Anordnung nach Anspruch 4, **dadurch gekennzeichnet, dass** die Anordnung eine Referenzsignalveränderungseinheit für die Frequenzwandlersteuereinheit zum Kombinieren des Steuersignals mit dem Referenzsignal umfasst.

5. Anordnung nach Anspruch 4, **dadurch gekennzeichnet, dass** die Anordnung eine Frequenzwandlersteuersignalveränderungseinheit zum Kombinieren des Steuersignals, welches durch die Einstelleinheit gebildet wird, mit dem Steuersignal des Frequenzwandlers umfasst.

6. Anordnung nach Anspruch 5 oder 6, **dadurch gekennzeichnet, dass** die Einstelleinheit ein integraler Bestandteil der Steuereinheit des Frequenzwandlers ist.

7. Anordnung nach Anspruch 5 oder 6, **dadurch gekennzeichnet, dass** die Einstelleinheit ein integraler Bestandteil des Frequenzwandlers ist, welcher eine Steuereinheit umfasst.

8. Anordnung nach Anspruch 5 oder 6, **dadurch gekennzeichnet, dass** die Einstelleinheit eine elektronische Schaltung ist.

9. Anordnung nach Anspruch 5 oder 6, **dadurch gekennzeichnet, dass** die Einstelleinheit ein Software-Aufbau ist, welcher ausgelegt ist, um in der Verarbeitungseinheit ausgeführt zu werden.

10. Anordnung nach Anspruch 5 oder 6, **dadurch gekennzeichnet, dass** die Einstelleinheit eine ASIC-Schaltung ist.

11. Anordnung nach einem beliebigen der Ansprüche 1 - 11, **dadurch gekennzeichnet, dass** die Last des Frequenzwandlers ein Elektromotor ist, welcher mit elektrischem Strom über den Frequenzwandler versorgt wird.

12. Verfahren zum Dämpfen unerwünschter Vibrationen, welche durch Drehmomentvibrationen der Generatoren in einem elektrischen Netz auftreten, wobei die Vibrationen in einem lokalen Netz auftreten, **dadurch gekennzeichnet, dass** das Verfahren die Schritte umfasst:
einen Messschritt zum Messen der Drehzahl jedes Generators des lokalen Netzes oder der Frequenz des lokalen Netzes,
den Schritt des Bildens eines Steuersignals zum Ausbilden eines Steuersignals als eine Reaktion auf die Messung des Messschritts und
den Schritt des Veränderns eines zweiten Steuersignals eines Frequenzwandlers durch Verändern eines Referenzsignals des Frequenzwandlers einer Steuereinheit des Frequenzwandlers durch das Steuersignal oder durch Verändern des zweiten Steuersignals, welches durch die Steuereinheit gebildet wird, durch Verwenden des Steuersignals, um die unerwünschten Vibrationen durch Einsatz des Frequenzwandlers und der Last des Frequenzwandlers zu dämpfen.

## Revendications

1. Agencement d'amortissement des vibrations survenant dans un réseau électrique d'un bateau, **caractérisé en ce que** l'agencement comprend une unité d'ajustement (12) ayant une première interface (15) pour recevoir des signaux de mesure contenant des données relatives à des vibrations de couple indésirables de générateurs du réseau électrique, et une deuxième interface (16) pour transmettre des signaux de commande afin d'amortir les vibrations, l'unité d'ajustement étant agencée pour constituer des signaux de commande en réponse aux données des signaux de mesure, les signaux de commande pouvant être reliés de manière opérationnelle au signal de commande du convertisseur de fréquence pour amortir les vibrations en utilisant le convertisseur de fréquence et la charge du convertisseur de fréquence,
dans lequel les signaux de commande sont agencés pour changer le signal de référence de l'unité de commande du convertisseur de fréquence ou le signal de commande constitué par l'unité de commande.

2. Agencement selon la revendication 1, **caractérisé en ce que** la première interface est agencée pour recevoir des signaux concernant le régime de rotation de chaque générateur du réseau local ou la fréquence du réseau local.

3. Agencement selon la revendication 1, **caractérisé en ce qu'**il comprend deux convertisseurs de fréquence ou plus et des combinaisons de charge du convertisseur de fréquence en question, dans lequel les convertisseurs de fréquence peuvent être commandés par l'unité d'ajustement (12) et reliés au réseau électrique.

4. Agencement selon la revendication 3, **caractérisé en ce que** l'agencement comprend une unité de changement de signal de référence d'unité de commande de convertisseur de fréquence pour combiner le signal de commande au signal de référence.

5. Agencement selon la revendication 4, **caractérisé en ce que** l'agencement comprend une unité de changement de signal de commande de convertisseur de fréquence pour combiner le signal de commande constitué par l'unité d'ajustement au signal de commande du convertisseur de fréquence.

6. Agencement selon la revendication 4 ou 5, **caractérisé en ce que** l'unité d'ajustement fait partie intégrante de l'unité de commande du convertisseur de fréquence.

7. Agencement selon la revendication 5 ou 6, **caractérisé en ce que** l'unité d'ajustement fait partie intégrante du convertisseur de fréquence comprenant une unité de commande.

8. Agencement selon la revendication 5 ou 6, **caractérisé en ce que** l'unité d'ajustement est un circuit électronique.

9. Agencement selon la revendication 5 ou 6, **caractérisé en ce que** l'unité d'ajustement est un ensemble logiciel agencé pour être exécutée dans l'unité de processeur.

10. Agencement selon la revendication 5 ou 6, **caractérisé en ce que** l'unité d'ajustement est un circuit ASIC.

11. Agencement selon l'une quelconque des revendications 1 à 10, **caractérisé en ce que** la charge du convertisseur de fréquence est un moteur électrique alimenté en énergie électrique par l'intermédiaire du convertisseur de fréquence.

12. Procédé d'amortissement des vibrations indésirables provoquées par des vibrations de couple de générateurs d'un réseau électrique, dans lequel les vibrations surviennent dans un réseau électrique local, **caractérisé en ce que** le procédé comprend les étapes de :
une étape de mesure pour mesurer le régime de rotation de chaque générateur du réseau local ou la fréquence du réseau local,
une étape de constitution d'un signal de commande pour constituer un signal de commande en réponse à la mesure de l'étape de mesure, et
une étape de changement d'un deuxième signal de commande d'un convertisseur de fréquence en changeant un signal de référence d'une unité de commande du convertisseur de fréquence par le signal de commande ou en changeant le deuxième signal de commande constitué par l'unité de commande en utilisant le signal de commande, pour amortir lesdites vibrations indésirables en utilisant le convertisseur de fréquence et la charge du convertisseur de fréquence.
